# FASCICULE DE BREVET EUROPEEN

(11) **EP 3 141 808 B1**
(45) Date de publication et mention de la délivrance du brevet: **23.01.2019**
(21) Numéro de dépôt: 16186585.2
(22) Date de dépôt: 31.08.2016
(51) Int. Cl.: F21V 14/02, B60Q 1/26, B60Q 1/44, F21S 43/19, F21S 43/145, F21S 43/237, F21S 43/245, F21Y 115/15, F21Y 105/00

(54) **DISPOSITIF LUMINEUX À PALETTE MOBILE**
LEUCHTVORRICHTUNG MIT BEWEGLICHEM HEBEL
LIGHTING DEVICE WITH MOVING VANE

(30) Priorité: 08.09.2015 FR 1558331
(43) Date de publication de la demande: 15.03.2017
(73) Titulaire: VALEO VISION, 93012 Bobigny Cedex (FR)
(72) Inventeur: RUAT, Olivier, 49800 Trelaze (FR); PATRIZI, Stéphane, 49460 Montreuil Juigné (FR)

(56) Documents cités:
- KR-B1- 101 157 645
- US-A1- 2005 099 810
- US-A1- 2006 133 104
- US-A1- 2015 060 779

## Description

L'invention est relative au domaine des dispositifs d'éclairage pour véhicule automobile. Un dispositif lumineux et un procédé d'utilisation d'un tel dispositif selon le préambule des revendications 1 et 12 sont connus de US 2006/1331404 A1.

De manière connue, ce type de dispositif tend à se complexifier du fait du nombre croissant de fonctions que ces dispositifs ont vocation à mettre en oeuvre. Parmi ces fonctions, on recense notamment la mise en oeuvre de séquences d'allumage, par exemple lors de la mise en marche du véhicule, qui présentent un caractère esthétique particulier. Ce caractère esthétique contribue notamment à définir l'apparence générale, ou la « signature visuelle », du véhicule considéré, et qui le différencie d'autres véhicules.
Dans ce contexte, l'invention vise à présenter un dispositif lumineux pour véhicule automobile qui permette la définition d'une signature visuelle particulière pour ce véhicule tout en présentant une conception, une fiabilité et une compacité optimisées.
A cet effet, l'invention concerne un dispositif lumineux pour véhicule automobile, le dispositif lumineux étant adapté pour émettre de la lumière selon une direction d'émission principale et comprenant :
- au moins une embase montée fixe dans le dispositif lumineux,
- au moins une palette, la palette étant articulée sur l'embase et présentant un panneau sur lequel est agencée au moins une source de lumière adaptée pour émettre de la lumière selon une direction de rayonnement privilégiée, et
- un dispositif d'actionnement adapté pour faire pivoter la palette par rapport à l'embase entre une position de repos et une position d'émission dans laquelle la direction de rayonnement privilégiée de la palette est voisine de la direction d'émission principale ou correspond sensiblement à la direction d'émission principale du dispositif lumineux.
Par exemple, l'embase est fixée à un boîtier du dispositif lumineux qui délimite une cavité dans laquelle les composants du dispositif sont agencés.
La ou les embases présentent par exemple une forme générale de U.
Dans un exemple de réalisation, la palette est articulée sur l'embase de sorte à pivoter autour d'un axe horizontal. Cet axe horizontal est par exemple orthogonal à la direction d'émission principale du dispositif lumineux. Par ailleurs, les positions de repos et d'émission sont par exemple des positions de bout de course de la palette. Le cas échéant, le dispositif d'actionnement est adapté pour que la palette ne puisse prendre de manière durable que l'une ou l'autre de ces positions.

Selon un aspect de l'invention, dans la position d'émission, l'écart angulaire entre la direction d'émission principale et la direction de rayonnement privilégiée de la palette est inférieur à 50°, voire inférieur à 15°.

Selon un aspect de l'invention, dans la position de repos, la source de lumière de la ou chaque palette est visible dans la direction d'émission.

Selon un aspect de l'invention, l'écart angulaire entre la position de repos et la position d'émission de ladite palette est supérieur à 40°.

Selon un aspect de l'invention, le dispositif comprend au moins deux palettes présentant chacune un panneau sur lequel est agencée au moins une source de lumière, à chaque embase étant associées deux palettes articulées sur ladite embase et agencées sur l'embase symétriquement l'une par rapport l'autre par rapport à la direction d'émission principale.

Avantageusement, le dispositif d'actionnement est agencé pour provoquer un déplacement simultané des deux palettes associées.

Selon un aspect de l'invention, le dispositif d'actionnement comprend un actionneur et une pièce mobile sur laquelle la ou chaque palette associée à l'embase considérée est articulée, l'actionneur étant adapté pour déplacer la pièce mobile par rapport à l'embase de façon à faire pivoter simultanément chaque palette associée à l'embase considérée par rapport à ladite embase entre la position de repos et la position d'émission.

La pièce mobile présente par exemple une forme générale de U.

Selon un aspect de l'invention, chaque embase comprend au moins une gorge de guidage dans laquelle la pièce mobile du dispositif d'actionnement correspondant est déplaçable.

Du fait du caractère fixe de l'embase par rapport au dispositif lumineux, la gorge de guidage est elle-même montée fixe dans le dispositif lumineux.

Avantageusement, la pièce mobile présente des dimensions, en particulier en termes d'espacement entre ses deux jambes, sensiblement complémentaires de celles de la gorge de guidage de l'embase correspondante.

Selon un aspect de l'invention, le déplacement de la pièce mobile par lequel la palette est pivotée par rapport à l'embase est un mouvement de translation.

Selon un aspect de l'invention, chaque palette comprend un bras de connexion dont une première extrémité est fixée au panneau correspondant, et dont une deuxième extrémité est d'une part fixée à l'embase correspondante par l'intermédiaire d'un premier axe, et d'autre part fixée à la pièce mobile associée par l'intermédiaire d'un deuxième axe.
La deuxième extrémité du bras de connexion comprend par exemple un premier orifice pour la réception du premier axe. Le premier axe est par exemple également reçu dans des passages agencés au niveau de l'extrémité libre de chacune de deux jambes que comprend chaque embase.
Le premier axe peut être formé par une pièce supplémentaire, c'est-à-dire par une pièce dédiée formant l'axe en question.
En variante, le premier axe est réalisé à partir de deux premiers tourillons formés sur l'un de l'embase et du bras de connexion et destinés à coopérer avec des premiers orifices formés sur l'autre de l'embase et du bras de connexion.
Par ailleurs, la deuxième extrémité du bras de connexion est par exemple fixée à l'embase par le premier axe au niveau des parois de la gorge de guidage.
Selon un aspect de l'invention, la deuxième extrémité du bras de connexion comprend un orifice pour la réception du deuxième axe, ledit orifice présentant une forme générale cylindrique de section oblongue.
Le deuxième axe est par exemple une pièce dédiée formant le deuxième axe en question.
En variante, le deuxième axe est formé par deux deuxièmes tourillons portés par la pièce mobile et destinés à coopérer avec ledit orifice. En variante, le bras de connexion peut comporter lesdits deuxièmes tourillons tandis que la pièce mobile comporte ledit orifice de section oblongue.
Selon un aspect de l'invention, que l'actionneur comprend un moteur, une bielle connectée au moteur et un vérin de connexion connectant la bielle à la pièce mobile.

Toutefois, en variante, l'actionneur comprend un fil à mémoire de forme associé à un ressort.

Selon l'invention, le dispositif comprend au moins deux embases fixes par rapport au boîtier, et le dispositif comprend en outre un bâti fixe par rapport au boîtier et sur lequel la ou chaque embase est agencée, les embases étant espacées les unes des autres le long du bâti.
Avantageusement, le dispositif comporte au moins une palette montée mobile sur chaque embase et sur laquelle est agencée au moins une source lumineuse surfacique.
Selon un aspect de l'invention, le dispositif comprend en outre une unité de commande adaptée pour faire pivoter chaque palette selon une séquence d'actionnement au cours de laquelle les palettes associées à des embases différentes sont pivotées entre leurs positions de repos et d'émission séquentiellement d'une embase à l'autre selon un sens de parcours donné du bâti.

Avantageusement, l'unité de commande est également adaptée pour commander l'allumage des sources de lumière.
Par exemple, l'unité de commande est configurée pour allumer chaque source de lumière conjointement avec le déplacement de la palette sur laquelle elle est agencée. En variante, l'unité de commande peut être agencée pour allumer toutes les sources de lumière préalablement aux déplacements des palettes. Selon un exemple, l'ensemble des sources de lumière peut être agencé pour réaliser une fonction d'indicateur de direction défilant.
Selon un aspect de l'invention, le bâti délimite une cavité, et le dispositif lumineux comprend en outre un module d'éclairage comprenant au moins un guide de lumière de forme allongée s'étendant dans la cavité délimitée par le bâti.
Selon un aspect de l'invention, la ou au moins une source de lumière est une source de lumière surfacique, notamment une diode électroluminescente organique, couvrant tout ou partie de la surface du panneau de la palette correspondante.
Par « source de lumière surfacique », on entend une source de lumière présentant une surface d'émission de lumière et dont l'épaisseur est négligeable devant les dimensions de cette surface d'émission de lumière.
La source de lumière surfacique peut avantageusement être une diode électroluminescente organique, ou OLED. Le cas échéant, l'aire de la surface émettrice de lumière de l'OLED peut être supérieure à 1 cm².
En variante, la source de lumière surfacique peut être un panneau lumineux formé par un assemblage de fibres optiques, notamment juxtaposées, tressées ou entremêlées, les fibres optiques étant associées à une ou plusieurs sources lumineuses, notamment comportant une ou plusieurs diodes électroluminescentes LED. Le cas échéant, la ou les sources lumineuses peuvent être agencées pour émettre de la lumière dans les extrémités des fibres optiques, les fibres optiques étant agencées pour diffuser cette lumière via des faces de sorties de ces fibres formées sur leur enveloppe sur toute ou partie de leur longueur, l'ensemble desdites faces de sorties formant ainsi la source de lumière surfacique, également appelée dans ce cas FOLED.
L'invention concerne également un procédé d'utilisation d'un dispositif lumineux selon l'une quelconque des revendications précédentes, le procédé comprenant :
- l'allumage de toutes les sources de lumières du dispositif lumineux,
- le déplacement de chaque palette entre la position de repos et la position d'émission via le dispositif d'actionnement, les palettes associées à une embase donnée étant pivotées simultanément, les palettes respectivement associées à des embases différentes étant pivotées de manière décalée dans le temps selon un ordre prédéfini le long du bâti.
Selon un aspect de l'invention, les palettes associées à des embases différentes sont pivotées entre leurs positions de repos et d'émission séquentiellement d'une embase à l'autre selon un sens de parcours donné du bâti.
L'invention sera mieux comprise à la lecture de la description détaillée qui va suivre, donnée uniquement à titre d'exemple et faite en référence aux Figures annexées, sur lesquelles :
- La Figure 1 est une illustration schématique d'un dispositif lumineux selon l'invention ;
- Les Figures 2a et 2b sont des vue du dispositif lumineux de la Figure 1 ;
- La Figure 3 illustre une palette du dispositif lumineux ;
- La Figure 4 illustre une pièce mobile du dispositif de la Figure 1 ; et
- La Figure 5 est un diagramme-bloc d'un procédé d'utilisation du dispositif lumineux selon l'invention.

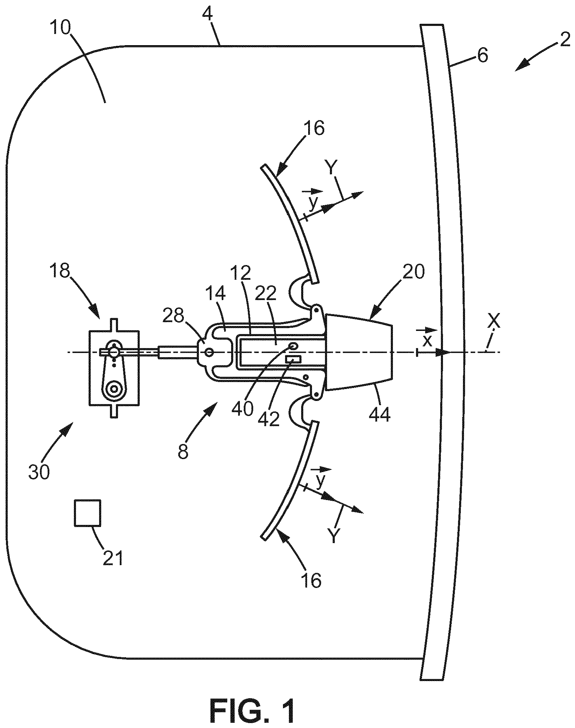

La Figure 1 illustre un dispositif lumineux selon l'invention.
La Figure 1 illustre un dispositif 2 selon l'invention. Le dispositif 2 est un dispositif lumineux d'éclairage ou de signalisation pour véhicule automobile. Par exemple, le dispositif 2 est un phare principal de véhicule, un feu de route, un feu de croisement, un clignotant ou un feu arrière.
Dans l'exemple de la Figure 1, le dispositif 2 est un feu arrière.
Le dispositif 2 est adapté pour émettre de la lumière selon une direction d'émission principale notée X.
Le dispositif 2 comprend un boîtier 4, une glace 6 et un module d'émission lumineuse 8, ci-après module 8.
Le boîtier 4 délimite intérieurement une cavité 10 dans laquelle le module 8 est agencé. La cavité 10 est obturée vers l'avant par la glace 6.
Le boîtier 4 et la glace 6 sont par exemple réalisés à partir de matériaux connus via un procédé de fabrication connu.
Le module 8 comprend un bâti 12, au moins une embase 14, au moins une palette 16 adaptée pour émettre de la lumière, et au moins un dispositif d'actionnement 18 configuré pour provoquer le déplacement de la palette 16. En outre, le module 8 comprend un module d'éclairage 20 et une unité de commande 21.

Le bâti 12 est fixé au boîtier 4. Le bâti 12 se présente sous la forme d'une pièce allongée ayant une section transverse ayant une forme générale de U. Il délimite ainsi intérieurement une cavité 22 à laquelle est rapporté le module d'éclairage 20, comme décrit ci-après. On note que la cavité 22 est, dans certaines réalisations, également utilisée pour le passage de la connectique du dispositif 2, en particulier de la connectique nécessaire à l'alimentation en énergie électrique des différents composants du dispositif 2.

Le bâti 12 s'étend sensiblement horizontalement entre les parois latérales du boîtier 4 auxquelles il est fixé. Il est agencé dans le boîtier 4 de sorte que la cavité soit ouverte vers l'avant du dispositif 2.

On note que dans certaines réalisations, le bâti 12 est incurvé, sa courbure étant orientée vers l'arrière du dispositif 2.

Le bâti 12 est par exemple réalisé à partir d'un masque du dispositif 2 permettant de cacher des parties non esthétiques, telles que des faisceaux de connexion, et dont une partie est agencée pour recevoir des embases.

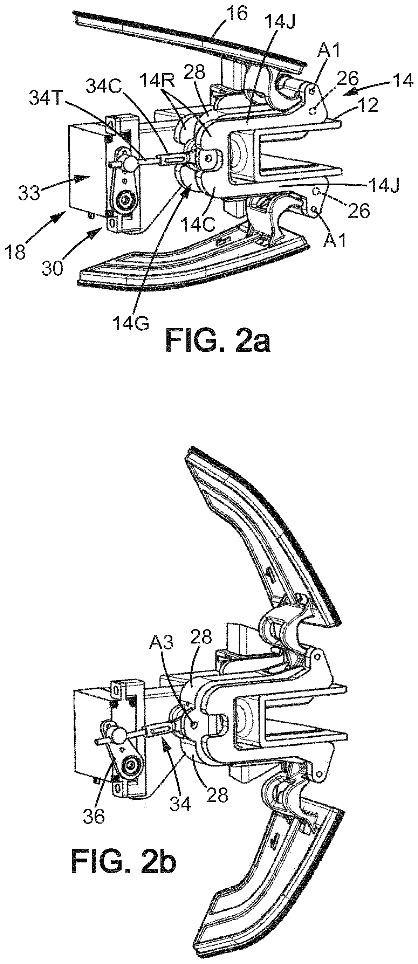

En référence aux Figures 1, 2a et 2b, le dispositif 2 comprend une pluralité d'embases 14 montées fixes dans le dispositif. Dans l'exemple des Figures, elles sont fixées sur le bâti 12, lui-même fixé au boîtier 4.

Les embases 14 sont décalées les unes des autres le long du bâti 12. Par exemple, elles sont régulièrement espacées les unes des autres.

Dans l'exemple de la Figure 1, le dispositif 2 comprend cinq embases 14.

A chaque embase 14 est associée au moins une palette 16. Avantageusement, à chaque embase 14 sont associées au moins deux palettes 16 disposées symétriquement sur l'embase 14 l'une par rapport à l'autre par rapport à la direction X.

En référence aux Figures 1, 2a et 2, chaque embase 14 présente une forme générale de U. Autrement dit, chaque embase 14 présente deux jambes 14J et une portion centrale 14C joignant les deux jambes 14J. Les deux jambes sont sensiblement parallèles l'une à l'autre.

Les dimensions de la section en U de chaque embase 14 sont sensiblement complémentaires de celle de la section en U du bâti 12. Chaque embase 14 est emboîtée sur le bâti 12 et y est fixée.

En référence à la Figure 2a, chaque embase 14 comprend une gorge de guidage 14G pour le guidage d'une pièce mobile du dispositif d'actionnement 18.

La gorge de guidage 14 est aménagée dans l'épaisseur de l'embase 14. Avantageusement, cette gorge de guidage 14G s'étend sur tout le pourtour de l'embase 14.

La gorge de guidage 14G se présente sous la forme d'un évidement de matière pratiqué sur une portion de l'épaisseur de l'embase 14. La gorge de guidage 14G forme ainsi un canal dans les flancs des jambes 14J et de la portion centrale 14C. Elle délimite en outre deux rebords 14R (Figure 2a) de l'embase 14R considérée.

En outre, l'extrémité libre de chaque jambe 14J de chaque embase 14 comprend des passages recevant un premier axe de rotation A1. Comme décrit ci-après, les palettes 16 associées à chaque embase 14 sont articulées sur l'embase 14 au moyen de cet axe A1.

Avantageusement, les rebords 14R de la portion centrale 14C sont pourvues d'un jour pour rendre accessible l'articulation de la pièce mobile évoquée ci-dessus au reste du dispositif d'actionnement 18.

Les embases sont avantageusement réalisées à partir de avec un matériau offrant un coefficient de frottement faible pour minimiser l'effort de l'actionneur.

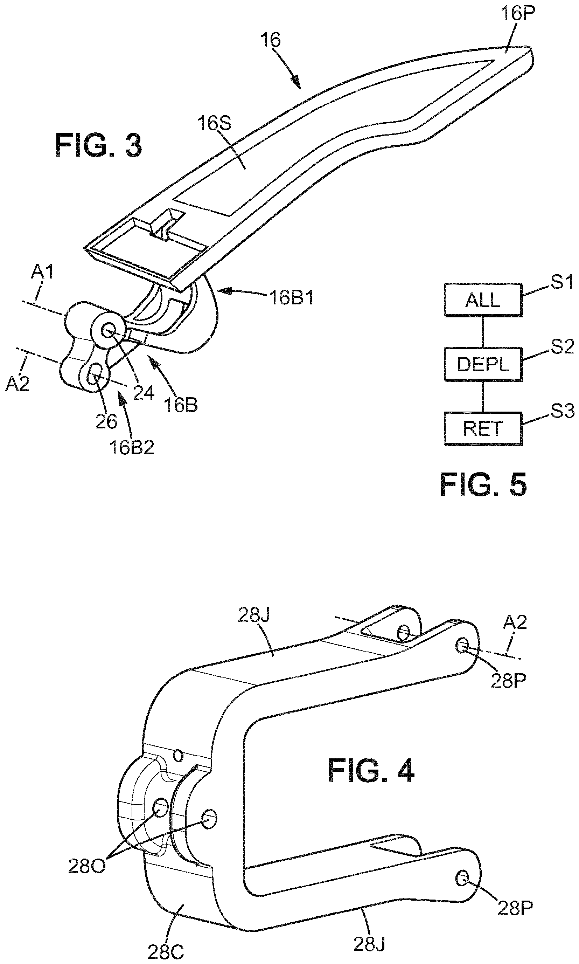

En référence aux Figures 2a, 2b et 3, chaque palette 16 est articulée sur l'embase 14 associée via un premier axe A1 décrit ci-dessus. En outre, chaque palette 16 est articulée sur la pièce mobile évoquée ci-dessus.

Chaque palette 16 présente un panneau 16P et un bras de connexion 16B.

Le panneau 16P se présente sous la forme d'un support présentant une surface donnée. Le panneau est par exemple sensiblement plan. Alternativement, le panneau 16P peut présenter une forme légèrement incurvée. Alternativement ou parallèlement, le panneau 16P peut présenter différentes portions formant une cassure entre elles. Ces portions sont par exemple venues de matière entre elles, ou bien fixées les unes aux autres.

En outre, le panneau 16P présente une surface de forme quelconque. Dans l'exemple de la Figure 3, le panneau 16P présente une forme générale de L.

Chaque panneau 16P est adapté pour émettre de la lumière dans une direction de rayonnement privilégiée notée Y.

La direction Y correspond par exemple à une direction normale au panneau. Cette normale est par exemple la normale à la partie centrale du panneau lorsque celui-ci présente une courbure régulière. Dans d'autres réalisations dans lesquels le panneau 16P présente des portions formant des cassures entre elles, cette direction correspond par exemple à la normale à une portion du panneau choisie.

Cette portion choisie est par exemple la portion qui forme l'écart angulaire le plus faible avec la direction X.

A cet effet, chaque panneau 16P comporte au moins une source de lumière 16S.

Dans le contexte de l'invention, la source de lumière 16S est une source surfacique de lumière. Comme indiqué ci-dessus, on entend par là une source de lumière présentant une surface d'émission de lumière et dont l'épaisseur est négligeable devant les dimensions de cette surface d'émission de lumière.

Avantageusement, la source de lumière 16S d'au moins un des panneaux 16P est un élément semiconducteur photo-émissif de type organique. Ce type d'élément photo-émissif est une diode électroluminescente organique connu sous l'acronyme anglophone OLED, pour « Organic Light-Emitting Diode ».

La source de lumière 16S forme un film photoémissif agencé sur le panneau 16P. Ce film couvre tout ou partie de la surface du panneau 16P. Avantageusement, la source de lumière 16S couvre sensiblement l'intégralité de la surface du panneau 16P.

La source de lumière 16S est par exemple fixée sur le panneau 16P par collage.

En outre, la source de lumière 16S est par exemple adaptée pour émettre de la lumière de couleur rouge, ou encore orange.

Le bras de connexion 16B est prévu pour la connexion de la palette 16 à l'embase 14 associée ainsi qu'à la pièce mobile évoquée ci-dessus.

Le bras de connexion 16B présente ainsi une première extrémité 16B1 fixée au panneau 16P. Avantageusement, cette fixation est réalisée au niveau de l'arrière du panneau 16P.

Le bras de connexion 16 présente également une deuxième extrémité 16B2 pour l'articulation de la palette 16 sur l'embase 14 via un premier axe A1 décrit ci-dessus, et pour l'articulation de la palette sur la pièce mobile via un deuxième axe A2.

A cet effet, la deuxième extrémité 16B2 comprend un premier orifice 24 pour la réception de l'un des premiers axes A1 de l'embase 14 considérée. Le premier orifice 24 présente une forme générale cylindrique de section sensiblement circulaire.

On note que dans ce mode de réalisation, le premier axe est une pièce dédiée de forme cylindrique et formant l'axe en question.

Toutefois, en variante, le premier axe est réalisé à partir de deux premiers tourillons formés sur l'un de l'embase 14 associée et du bras de connexion 16B et destinés à coopérer avec des premiers orifices formés sur l'autre de l'embase et du bras de connexion.Avantageusement, les premiers axes A1 sont disposés horizontalement (par rapport à l'orientation de la Figure). Dans l'exemple des Figures, les axes A1 sont ainsi orthogonaux à la direction d'émission X. Les palettes 16 sont donc adaptées pour pivoter autour d'un axe perpendiculaire à la direction principale d'émission X.

La deuxième extrémité 16B2 du bras de connexion 16 comprend en outre un deuxième orifice 26 pour la réception du deuxième axe A2.

Avantageusement, le deuxième orifice 26 présente une forme générale cylindrique de section oblongue. Dans certaines réalisations, cette section oblongue est rectiligne. En variante, cette section oblongue est courbe.

La forme de la section de ce deuxième orifice 26 a pour effet de permettre la rotation de la palette 16 sous l'effet d'un mouvement de translation imprimé à la pièce mobile du dispositif d'actionnement 18.

Dans l'exemple ci-dessus, le deuxième axe A2 est une pièce dédiée formant l'axe en question.

En variante, le deuxième axe A2 est formé par deux deuxièmes tourillons portés par la pièce mobile et destinés à coopérer avec le deuxième orifice 26. En variante, le bras de connexion peut comporter lesdits deuxièmes tourillons tandis que la pièce mobile comporte ledit orifice de section oblongue. Par ailleurs, avantageusement, la deuxième extrémité 16B2 est fixée sur l'embase correspondante au niveau de la gorge de guidage 14G, et plus spécifiquement au niveau des rebords 14R qui la délimitent. Cette fixation est par exemple réalisée au niveau d'une zone que la pièce mobile ne peut atteindre lors de ses déplacements. Par exemple, celle-ci est réalisée au niveau de protubérances que présentent les rebords et qui s'étendent latéralement à l'écart de la jambe 14J correspondante au niveau de l'extrémité libre de cette jambe 14J (Figures 2a et 2b).

A nouveau en référence aux Figures 2a et 2b, le dispositif 2 comprend, pour chaque embase 14, un dispositif d'actionnement 18. Chaque dispositif d'actionnement 18 est configuré pour provoquer le déplacement de la ou les palettes 16 associées à l'embase 14 correspondante par rapport à cette embase 14 entre une position de repos illustrée sur la Figure 2a et une position d'émission illustrée sur la Figure 2b.

Les positions de repos et d'émission sont par exemple des positions de bout de course de la palette.

Dans certaines réalisations, le dispositif d'actionnement est adapté pour que la ou les palettes associées ne puissent prendre de manière durable que l'une ou l'autre de ces positions. En d'autres termes, les positions intermédiaires ne sont envisagées qu'en tant que positions transitoires lors du basculement entre la position de repos et la position d'émission (ou inversement), mais pas en tant que positions dans lesquelles les palettes sont arrêtées.

Dans la position d'émission, le panneau 16P des palettes 16 fait sensiblement face à la direction d'émission X. Le panneau 16P est alors observable dans la direction d'émission X sous un angle non rasant.

Dans la position de repos, le panneau 16P des palettes 16 ne fait pas face à la direction d'émission X. Par exemple, il est alors masqué par le bâti 12 et n'est pas visible. Alternativement, dans l'exemple des Figures, dans la position de repos, le panneau 16P des palettes est visible dans la direction X sous un angle faible voire rasant.

Autrement dit, dans la position d'émission, la direction de rayonnement privilégiée Y d'une palette 16 donnée est voisine de la direction X, ou correspond sensiblement à la direction X.

Au sens de la présente invention, par « voisine », on entend que l'écart angulaire en valeur absolue entre les directions X et Y est inférieur ou égal à 50°. Avantageusement, cet écart angulaire est inférieur à 15°.

L'écart angulaire est pris dans le plan de la Figure 1. Par exemple, cet écart angulaire est sensiblement égal à 25°. Cet écart angulaire correspond ainsi à l'angle d'élévation de la direction de rayonnement privilégiée Y de la palette par rapport à la direction d'émission principale X du dispositif 2, et correspond à l'angle orienté repéré par les vecteurs *̅x̅*̅ et *̅y̅*̅ sur la Figure 1.

Dans la position de repos, l'écart angulaire entre ces directions est supérieur ou égal à 70°. Il vaut par exemple 75°.

D'autres configurations angulaires sont possibles dans l'une et l'autre de ces positions.

De manière générale, avantageusement, l'écart angulaire entre les positions de repos et d'émission est supérieur ou égal à 40°, et préférentiellement à 50°. L'écart angulaire choisi est alors obtenu en sélectionnant notamment la forme et les dimensions de la section du deuxième orifice 26 du panneau 16 et la longueur de course de la pièce mobile décrite ci-après.

Comme indiqué précédemment, le dispositif d'actionnement 18 est configuré pour provoquer le déplacement d'au moins une palette 16.

Plus spécifiquement, à chaque embase est associé un dispositif d'actionnement 18 adapté pour provoquer le déplacement des deux palettes associées à l'embase considérée. Avantageusement, le dispositif d'actionnement est alors configuré pour provoquer un déplacement simultané des deux palettes associées à l'embase considérée.

Chaque dispositif d'actionnement comprend une pièce mobile 28. En outre, il comprend un actionneur, ou mécanisme d'entraînement, 30.

En référence à la Figure 4, la pièce mobile 28 présente une forme générale de U. Elle comprend ainsi deux jambes 28J parallèles et une portion centrale 28C connectant les deux jambes 28J.

La pièce mobile 28 présente des dimensions, en particulier en termes d'espacement entre les deux jambes 28J, sensiblement complémentaires de celles de la gorge de guidage 14G de l'embase.

Chaque pièce mobile 28 est couplée à une embase donnée. Chaque pièce mobile est plus spécifiquement emboîtée sur l'embase correspondante de sorte que leurs formes de U respectives coïncident. La pièce mobile 28 est reçue dans la gorge de guidage 14G et y est mobile selon un mouvement de translation.

Selon ce mouvement de translation, les jambes 28J de la pièce mobile 28 glissent dans la gorge de guidage 14G le long des jambes 14J de l'embase 14 correspondante, comme illustré sur les Figures 2a et 2b. Lors de ce déplacement, la portion de connexion 28C de la pièce mobile se déplace en restant sensiblement parallèle à la portion de connexion 14C de l'embase 14.

L'extrémité libre de chaque jambe 28J comporte une lumière de passage 28P pour la réception du deuxième axe A2 (Figure 4) également reçu dans le deuxième orifice 26 des palettes 16 associées à l'embase 14 considérée.

La portion centrale 28C de la pièce mobile 28 comporte deux saillies comportant chacune un orifice de passage 280. Les orifices de passage 280 sont agencés en regard l'un de l'autre et sont prévus pour la réception d'un axe A3 (Figure 2b) permettant l'articulation de la pièce mobile sur le mécanisme d'entraînement 30.

Le mécanisme d'entraînement 30 en question comporte un moteur 33, un vérin de connexion 34 et une bielle 36.

Le moteur 33 est configuré pour entraîner la rotation de la bielle 36 lors de son fonctionnement.

Le vérin de connexion 34 lie cinématiquement la pièce mobile 28 au moteur 33 et à la bielle 36.

Il présente un cylindre 34C dans lequel est agencé un piston déplaçable (non représenté) portant une tige 34T dont l'extrémité libre est fixée à la bielle 36. Le vérin 34est lui-même fixé à la pièce mobile 28 par l'intermédiaire de l'axe A3.

La bielle 36 est configurée pour actionner le vérin de connexion 34 et la pièce mobile 28 lors du fonctionnement du moteur.

En référence à la Figure 1, le module d'éclairage 20 est configuré pour réaliser une fonction d'éclairage spécifique du dispositif 2. Dans l'exemple des Figures, le module d'éclairage 20 est ainsi configuré pour réaliser la fonction d'éclairage de feu arrière.

A cet effet, le module d'éclairage 20 comprend au moins un guide de lumière 40. Dans l'exemple des Figures, le module d'éclairage 20 comprend deux guides de lumière 40 et 42. Les guides de lumière 40, 42 présentent une forme générale allongée et s'étendent dans la cavité 22 délimitée par le bâti 12.

Le premier guide de lumière 40 présente par exemple une section circulaire.

Le deuxième guide de lumière 42 présente par exemple une section autre que circulaire.

Les deux guides 40, 42 sont couplés à l'une de leur extrémité à une source de lumière (non représentée) qui injecte dans la lumière dans le guide correspondant. Ces guides présentent par ailleurs des prismes se présentant sous la forme de reliefs ménagés dans leur surface, par exemple au niveau de leur partie arrière, et configurés pour dévier la lumière parcourant le guide correspondant dans la direction X.

Le module d'éclairage 20 comprend en outre une glace de fermeture 44 configurée pour conférer à la lumière émise par les guides de lumière 40, 42 une apparence particulière.

Par exemple, la glace de fermeture 44 présente des propriétés opalescentes.

L'unité de commande 21 est configuré pour commander les différents dispositifs d'actionnement 18 du dispositif 2. Dans le mode de réalisation des Figures, elle est en particulier configurée pour commander la mise en marche des moteurs 33 des dispositifs d'actionnement 18.

Avantageusement, elle est en outre configurée pour commander l'allumage et l'extinction des sources de lumière 16S portées par les différentes palettes 16.

Par exemple, l'unité de commande est configurée pour allumer chaque source de lumière 16S et, conjointement à l'allumage d'une source de lumière donnée, commander le déplacement de la palette sur laquelle elle est agencée.

En variante, l'unité de commande est configurée pour allumer toutes les sources de lumière préalablement aux déplacements des palettes.

Selon un exemple de réalisation, l'unité de commande est configurée pour mettre en oeuvre l'allumage et/ou l'extinction de l'ensemble des sources de lumière 16S pour réaliser une fonction d'indicateur de direction défilant.

L'unité de commande 21 comprend par exemple un microcontrôleur programmable.

On note que l'unité de commande 21 est par exemple située dans le dispositif 2. Alternativement, elle est située à l'extérieur du dispositif 2.

Avantageusement, l'unité de commande 21 est configurée pour faire pivoter chaque palette selon une séquence d'actionnement au cours de laquelle les palettes 16 associées à des embases différentes sont pivotées entre leurs positions de repos et d'émission séquentiellement d'une embase à l'autre selon un sens de parcours donné du bâti.

Le fonctionnement du dispositif 2 va maintenant être décrit en référence aux Figures.

Dans une configuration initiale, les sources de lumière 16S sont éteintes, de même que les guides de lumière 40, 42.

En outre, les palettes 16 se trouvent en position de repos.

Les étapes suivantes sont par exemple mise en oeuvre en réponse à la détection d'un événement particulier. Par exemple, elles sont mises en oeuvre à la suite de la mise en marche du véhicule sur lequel le dispositif 2 est monté. En ce sens, le procédé suivant forme un scénario d'accueil, ou « Welcome Scénario » en anglais.

Lors d'une étape initiale S1, l'unité de commande 21 commande l'allumage de tout ou partie des sources de lumière 16S. Les sources de lumière 16S forment alors des films lumineux couvrant tout ou partie du panneau 16P de la palette 16 correspondante.

L'allumage des sources de lumière 16S est plus particulièrement mis en oeuvre par l'unité de commande 21 selon une séquence d'allumage prédéterminée.

Dans un exemple de séquence, les sources de lumière 16S sont séquentiellement allumées les unes après les autres de proche en proche selon un sens de parcours donné du bâti 12.

Autrement dit, l'unité de commande 21 commande l'allumage des sources de lumière 16S associées aux deux palettes 16 portées par une embase 14 située à une extrémité du bâti 12. Puis, tout en maintenant ces sources de lumière allumées, les palettes de l'embase 14 voisine sont allumées, et ainsi de suite jusqu'à l'allumage de toutes les sources de lumière du dispositif 2.

On note que pour l'allumage des sources de lumière 16S, l'unité de commande 21 commande à une source d'énergie électrique (non représentée) l'alimentation des sources de lumière 16S.

En variante, les sources de lumière 16S sont toutes allumées simultanément.

Une fois toutes les sources de lumière 16S allumées, ou bien parallèlement à cette séquence d'allumage, lors d'une étape S2, les palettes 16 sont pivotées selon une séquence prédéterminée.

Par exemple, lors de cette séquence, les palettes 16 sont séquentiellement pivotées les unes après les autres de proche en proche selon un sens de parcours donné du bâti 12. Ce sens est par exemple le même que le sens observé lors de l'étape S1. Alternativement, il s'agit du sens inverse.

Autrement dit, l'unité de commande 21 commande au dispositif d'actionnement 18 associé à une embase 14 située à une extrémité du bâti 12 de faire passer les deux palettes 16 de cette embase 14 depuis la position de repos jusqu'à la position d'émission.

Ce passage est ensuite commandé au dispositif d'actionnement 18 de l'embase 14 voisine, et ainsi de suite jusqu'à ce que toutes les palettes soient passées en position d'émission.

On note que le pivotement des palettes 16 associées à une embase 14 peut être amorcé alors que les palettes 16 associés à l'embase précédente (au sens du sens de parcours du bâti qui est considéré) ne sont pas encore parvenues jusqu'à leur position d'émission.

Pour ce passage des palettes 16 d'une embase 14 donnée jusqu'à la position d'émission, l'unité de commande 21 commande la mise en marche du moteur 33 du dispositif d'actionnement 18 considéré. La bielle 36 associée est alors entraînée en mouvement. La tige 34T du vérin 34 correspondant est alors déplacée de sorte que le piston associé vienne en fin de course dans le cylindre 34C correspondant et exerce une traction sur la pièce mobile 28 à laquelle il est fixé.

Cette traction se traduit par la translation de la pièce mobile 28 relativement à l'embase 14 associée selon un mouvement de translation parallèle à la direction des jambes 14J de l'embase 14 dans la gorge de guidage 14G.

Ce faisant, les parois des lumières de passage 28P en extrémité de jambe 28 tirent sur les deux axes A2 correspondant. Ces axes se déplacent dans l'orifice 26 correspondant des palettes 16 associées, ce qui provoque la rotation de ces palettes 16 autour de leur axe A1 et la rotation du panneau 16P de ces palettes depuis la position de repos jusqu'à la position d'émission.

Une fois la séquence de pivotement des palettes achevée, lors d'une étape S3, les palettes sont ramenées en position de repos et les sources de lumière 16S sont éteintes. A cet effet, l'unité de commande 21 commande aux dispositifs d'actionnement 18 la translation des pièces mobiles 28 en direction des embases 14. Pour une pièce mobile 28 donnée, cette translation provoque le déplacement du piston du vérin 34 associé jusqu'au fond du cylindre, puis le déplacement du cylindre en direction de l'embase, ce qui provoque la translation de la pièce mobile 28 dans la gorge de guidage 14G de l'embase correspondante. Les axes A2 portés par l'embase 14 sont déplacés dans l'orifice 26 puis sollicitent le bras 16B de la palette 16 de façon à faire pivoter les palettes vers leur position de repos.

Cette étape est optionnellement menée selon une séquence prédéterminée. Cette séquence comprend par exemple l'extinction séquentielle ou simultanée des sources de lumière 16S et le pivotement séquentiel ou simultané des palettes, ces actions étant menées dans un ordre choisi.

Parallèlement à une ou plusieurs de ces étapes ou bien consécutivement à celles-ci, le dispositif d'éclairage 20 est commandé à l'émission par l'unité de commande 21 pour la réalisation de la fonction d'éclairage correspondante. Dans l'exemple des Figures, le dispositif d'éclairage 20 est par exemple commandé à l'émission en réponse à un freinage du véhicule.

Le dispositif selon l'invention présente plusieurs avantages.

Notamment, il permet la mise en oeuvre d'une signature lumineuse améliorée par la mise en mouvement de surfaces lumineuses, et ce tout en présentant une facture robuste, compacte et simple.

En outre, l'emploi de diodes de type OLED améliore l'apparence générale du dispositif.

En outre, il s'appuie sur la transformation d'un mouvement de translation en mouvement de rotation pour l'obtention du mouvement des palettes, et est donc de robustesse améliorée.

Parallèlement, les éléments mobiles du dispositif et les dispositifs d'actionnement n'entravent pas la réalisation des autres fonctions du dispositif 2, telles que la fonction de feu arrière réglementaire lorsque le dispositif 2 est un feu arrière de véhicule automobile.

D'autres modes de réalisation sont envisageables.

En particulier, en variante, le dispositif d'actionnement 18 réalise le pivotement d'une palette 16 par l'intermédiaire d'un fil à mémoire de forme et d'un ressort. Le fil à mémoire de forme est associé à un sens de rotation de la palette, le ressort étant associé au sens de rotation inverse.

Ce fil et le ressort remplacent par exemple la bielle 36, le moteur 33 et le vérin de connexion 34. L'unité de commande 21 est alors configurée pour commander l'alimentation en énergie électrique du fil à mémoire de forme pour le faire s'élever en température et retrouver la forme mémorisée, et interrompre cette alimentation pour le faire baisser en température et autoriser sa déformation, de sorte que la palette puisse pivoter sous l'effet de la sollicitation exercée par le ressort.

## Revendications

1. Dispositif lumineux (2) pour véhicule automobile, le dispositif lumineux (2) étant adapté pour émettre de la lumière selon une direction d'émission principale (X) et comprenant :
- au moins une embase (14) montée fixe dans le dispositif lumineux (2),
- au moins une palette (16), la palette (16) étant articulée sur l'embase (14) et présentant un panneau (16P) sur lequel est agencée au moins une source de lumière (16S) adaptée pour émettre de la lumière selon une direction de rayonnement privilégiée (Y), et
- un dispositif d'actionnement (18) adapté pour faire pivoter la palette (16) par rapport à l'embase (14) entre une position de repos et une position d'émission dans laquelle la direction de rayonnement privilégiée (Y) de la palette (16) est voisine de la direction d'émission principale (X) ou correspond sensiblement à la direction d'émission principale (X) du dispositif lumineux (2) **caractérisé en ce qu'**il comprend au moins deux embases (14) fixes par rapport à un boîtier (4) du dispositif (2), et **en ce qu'**il comprend en outre un bâti (12) fixe par rapport au boîtier (4) et sur lequel la ou chaque embase (14) est agencée, les embases (14) étant espacées les unes des autres le long du bâti (12).

2. Dispositif selon la revendication 1, **caractérisé en ce que** dans la position de repos, la source de lumière (16S) de la ou chaque palette est visible dans la direction d'émission (X).

3. Dispositif selon l'une quelconque des revendications précédentes, **caractérisé en ce qu'**il comprend au moins deux palettes (16) présentant chacune un panneau (16P) sur lequel est agencée au moins une source de lumière (16S), à chaque embase (14) étant associées deux palettes (16) articulées sur ladite embase et agencées sur l'embase symétriquement l'une par rapport l'autre par rapport à la direction d'émission principale (X).

4. Dispositif selon la revendication l'une quelconque des revendications précédentes, **caractérisé en ce que** le dispositif d'actionnement (18) comprend un actionneur (30) et une pièce mobile (28) sur laquelle la ou chaque palette (16) associée à l'embase considérée est articulée, l'actionneur (30) étant adapté pour déplacer la pièce mobile (28) par rapport à l'embase de façon à faire pivoter simultanément chaque palette associée à l'embase considérée par rapport à ladite embase entre la position de repos et la position d'émission.

5. Dispositif selon la revendication 4, **caractérisé en ce que** chaque embase comprend au moins une gorge de guidage (14G) dans laquelle la pièce mobile du dispositif d'actionnement correspondant est déplaçable.

6. Dispositif selon la revendication 4 ou 5, **caractérisé en ce que** le déplacement de la pièce mobile (28) par lequel la palette (16) est pivotée par rapport à l'embase (14) est un mouvement de translation.

7. Dispositif selon l'une des revendications 4 à 6, **caractérisé en ce que** chaque palette (16) comprend un bras de connexion (16B) dont une première extrémité (16B1) est fixé au panneau correspondant, et dont une deuxième extrémité (16B2) est d'une part fixée à l'embase correspondante par l'intermédiaire d'un premier axe (A1), et d'autre part fixée à la pièce mobile (28) associée par l'intermédiaire d'un deuxième axe (A2).

8. Dispositif selon la revendication 7, dans lequel la deuxième extrémité (16B2) du bras de connexion comprend un orifice (26) pour la réception du deuxième axe (A2), ledit orifice (26) présentant une forme générale cylindrique de section oblongue.

9. Dispositif selon l'une des revendications précédentes, **caractérisé en ce que** le dispositif (2) comprend en outre une unité de commande (21) adaptée pour faire pivoter chaque palette (16) selon une séquence d'actionnement au cours de laquelle les palettes (16) associées à des embases différentes sont pivotées entre leurs positions de repos et d'émission séquentiellement d'une embase à l'autre selon un sens de parcours donné du bâti (12).

10. Dispositif selon l'une des revendications précédentes, **caractérisé en ce que** le bâti délimite une cavité (22), et **en ce que** le dispositif lumineux (2) comprend en outre un module d'éclairage (20) comprenant au moins un guide de lumière (40) de forme allongée s'étendant dans la cavité (22) délimitée par le bâti (12).

11. Dispositif selon l'une quelconque des revendications précédentes, **caractérisé en ce que** la ou au moins une source de lumière (16S) est une source de lumière surfacique, notamment une diode électroluminescente organique, couvrant tout ou partie de la surface du panneau (16P) de la palette correspondante.

12. Procédé d'utilisation d'un dispositif (2) selon l'une quelconque des revendications précédentes, le procédé comprenant :
- l'allumage de toutes les sources de lumières (16S) du dispositif lumineux (2),
- le déplacement de chaque palette (16) entre la position de repos et la position d'émission via le dispositif d'actionnement (18), les palettes (16) associées à une embase (14) donnée étant pivotées simultanément, les palettes (16) respectivement associées à des embases différentes (14) étant pivotées de manière décalée dans le temps selon un ordre prédéfini le long du bâti (12).

13. Procédé selon la revendication 12 mis en oeuvre au moyen d'un dispositif selon la revendication 9, dans lequel les palettes (16) associées à des embases différentes sont pivotées entre leurs positions de repos et d'émission séquentiellement d'une embase à l'autre selon un sens de parcours donné du bâti (12).

## Patentansprüche

1. Leuchtvorrichtung (2) für ein Kraftfahrzeug, wobei die Leuchtvorrichtung (2) angepasst ist, Licht gemäß einer Hauptemissionsrichtung (X) zu emittieren, und Folgendes umfasst:
- mindestens einen Sockel (14), der fest in der Leuchtvorrichtung (2) angebracht ist,
- mindestens einen Flügel (16), wobei der Flügel (16) an den Sockel (14) angelenkt ist und ein Panel (16P) aufweist, auf dem mindestens eine Lichtquelle (16S) angeordnet ist, die angepasst ist, Licht gemäß einer privilegierten Strahlungsrichtung (Y) zu emittieren, und
- eine Betätigungsvorrichtung (18), die angepasst ist, den Flügel (16) bezogen auf den Sockel (14) zwischen einer Ruheposition und einer Emissionsposition, in der die privilegierte Strahlungsrichtung (Y) des Flügels (16) der Hauptemissionsrichtung (X) benachbart ist oder der Hauptemissionsrichtung (X) der Leuchtvorrichtung (2) im Wesentlichen entspricht, zu schwenken, **dadurch gekennzeichnet, dass** sie mindestens zwei Sockel (14) umfasst, die bezogen auf ein Gehäuse (4) der Vorrichtung (2) fest sind, dadurch, dass sie ferner ein Gestell (12) umfasst, das bezogen auf das Gehäuse (4) fest ist, und auf dem der oder jeder Sockel (14) angeordnet ist, wobei die Sockel (14) entlang dem Gestell (12) voneinander beabstandet sind.

2. Vorrichtung nach Anspruch 1, **dadurch gekennzeichnet, dass** in der Ruheposition die Lichtquelle (16S) des oder jedes Flügels in der Emissionsrichtung (X) sichtbar ist.

3. Vorrichtung nach einem der vorhergehenden Ansprüche, **dadurch gekennzeichnet, dass** sie mindestens zwei Flügel (16) umfasst, die jeweils ein Panel (16P) aufweisen, auf dem mindestens eine Lichtquelle (16S) angeordnet ist, wobei mit jedem Sockel (14) zwei Flügel (16) in Verbindung stehen, die an den Sockel angelenkt sind und auf dem Sockel symmetrisch zueinander bezogen auf die Hauptemissionsrichtung (X) angeordnet sind.

4. Vorrichtung nach Anspruch einem der vorhergehenden Ansprüche, **dadurch gekennzeichnet, dass** die Betätigungsvorrichtung (18) ein Betätigungselement (30) und ein bewegliches Teil (28) umfasst, auf dem der oder jeder Flügel (16), der mit dem betreffenden Sockel in Verbindung steht, angelenkt ist, wobei das Betätigungselement (30) angepasst ist, das bewegliche Teil (28) bezogen auf den Sockel zu bewegen, um jeden Flügel, der mit dem betreffenden Sockel in Verbindung steht, gleichzeitig bezogen auf den Sockel zwischen der Ruheposition und der Emissionsposition zu schwenken.

5. Vorrichtung nach Anspruch 4, **dadurch gekennzeichnet, dass** jeder Sockel mindestens eine Führungsnut (14G) umfasst, in der das bewegliche Teil der entsprechenden Betätigungsvorrichtung bewegbar ist.

6. Vorrichtung nach Anspruch 4 oder 5, **dadurch gekennzeichnet, dass** die Bewegung des beweglichen Teils (28), durch die der Flügel (16) bezogen auf den Sockel (14) geschwenkt wird, eine Translationsbewegung ist.

7. Vorrichtung nach einem der Ansprüche 4 bis 6, **dadurch gekennzeichnet, dass** jeder Flügel (16) einen Verbindungsarm (16B) umfasst, von dem ein erstes Ende (16B1) an dem entsprechenden Panel befestigt ist, und von dem ein zweites Ende (16B2) einerseits mittels einer ersten Achse (A1) an dem entsprechenden Sockel befestigt ist und andererseits mittels einer zweiten Achse (A2) an dem zugehörigen beweglichen Teil (28) befestigt ist.

8. Vorrichtung nach Anspruch 7, wobei das zweite Ende (16B2) des Verbindungsarms eine Öffnung (26) zur Aufnahme der zweiten Achse (A2) umfasst, wobei die Öffnung (26) eine längliche, im Allgemeinen zylindrische Querschnittsform aufweist.

9. Vorrichtung nach einem der vorhergehenden Ansprüche, **dadurch gekennzeichnet, dass** die Vorrichtung (2) ferner eine Steuerungseinheit (21) umfasst, die angepasst ist, jeden Flügel (16) entsprechend einer Betätigungssequenz zu schwenken, während welcher die Flügel (16), die mit verschiedenen Sockeln in Verbindung stehen, in einer bestimmten Streckenrichtung des Gestells (12) sequentiell von einem Sockel zum anderen zwischen ihren Ruhepositionen und Emissionspositionen geschwenkt werden.

10. Vorrichtung nach einem der vorhergehenden Ansprüche, **dadurch gekennzeichnet, dass** das Gestell einen Hohlraum (22) begrenzt, und dadurch, dass die Leuchtvorrichtung (2) ferner ein Beleuchtungsmodul (20) umfasst, das mindestens einen Lichtleiter (40) länglicher Form umfasst, der sich in dem Hohlraum (22) erstreckt, der von dem Gestell (12) begrenzt wird.

11. Vorrichtung nach einem der vorhergehenden Ansprüche, **dadurch gekennzeichnet, dass** die oder mindestens eine Lichtquelle (16S) eine Flächenlichtquelle ist, insbesondere eine organische Leuchtdiode, die die gesamte oder einen Teil der Fläche des Panels (16P) des entsprechenden Flügels abdeckt.

12. Verfahren zur Nutzung einer Vorrichtung (2) nach einem der vorhergehenden Ansprüche, das Verfahren umfassend:
- das Einschalten aller Lichtquellen (16S) der Leuchtvorrichtung (2),
- das Bewegen jedes Flügels (16) zwischen der Ruheposition und der Emissionsposition über die Betätigungsvorrichtung (18), wobei die Flügel (16), die mit einem bestimmten Sockel (14) in Verbindung stehen, gleichzeitig geschwenkt werden, wobei die Flügel (16), die jeweils mit unterschiedlichen Sockeln (14) in Verbindung stehen, zeitversetzt entsprechend einer vorbestimmten Reihenfolge entlang des Gestells (12) geschwenkt werden.

13. Verfahren nach Anspruch 12, das mittels einer Vorrichtung nach Anspruch 9 durchgeführt wird, wobei die Flügel (16), die mit unterschiedlichen Sockeln in Verbindung stehen, in einer bestimmten Streckenrichtung des Gestells (12) sequentiell von einem Sockel zum anderen zwischen ihren Ruhepositionen und Emissionspositionen geschwenkt werden.

## Claims

1. Lighting device (2) for motor vehicle, the lighting device (2) being designed to emit light in a main direction of emission (X) and comprising:
- at least one mount (14) fixedly mounted in the lighting device (2),
- at least one vane (16), the vane (16) being articulated to the mount (14) and having a panel (16P) on which is arranged at least one light source (16S) suited to emitting light in a favoured direction of radiation (Y), and
- an actuating device (18) suited to causing the vane (16) to pivot with respect to the mount (14) between a rest position and an emission position in which the favoured direction of radiation (Y) of the vane (16) is close to the main direction of emission (X) or corresponds more or less to the main direction of emission (X) of the lighting device (2), **characterized in that** it comprises at least two mounts (14) which are fixed with respect to a housing (4) of the device (2) and **in that** it further comprises a framework (12) that is fixed relative to the housing (4) and on which the or each mount (14) is arranged, the mounts (14) being spaced apart along the framework (12).

2. Device according to Claim 1, **characterized in that**, in the rest position, the light source (16S) of the or each vane is visible in the direction of emission (X).

3. Device according to either one of the preceding claims, **characterized in that** it comprises at least two vanes (16) each having a panel (16P) on which is arranged at least one light source (16S), there being associated with each mount (14) two vanes (16) which are articulated to said mount and arranged on the mount symmetrically with respect to one another about the main direction of emission (X).

4. Device according to claim any one of the preceding claims, **characterized in that** the actuating device (18) comprises an actuator (30) and a moving part (28) to which the or each vane (16) associated with the relevant mount is articulated, the actuator (30) being suited to moving the moving part (28) with respect to the mount in such a way as to cause each vane associated with the relevant mount to pivot simultaneously with respect to said mount between the rest position and the emission position.

5. Device according to Claim 4, **characterized in that** each mount comprises at least one guide groove (14G) in which the moving part of the corresponding actuating device can move.

6. Device according to Claim 4 or 5, **characterized in that** the movement of the moving part (28) by means of which movement the vane (16) is pivoted with respect to the mount (14) is a translational movement.

7. Device according to one of Claims 4 to 6, **characterized in that** each vane (16) comprises a connecting arm (16B) of which a first end (16B1) is fixed to the relevant panel, and of which a second end (16B2) is, on the one hand, fixed to the relevant mount via a first axis (A1) and, on the other hand, fixed to the associated moving part (28) via a second axis (A2).

8. Device according to Claim 7, in which the second end (16B2) of the connecting arm comprises an orifice (26) to accept the second axis (A2), said orifice (26) having a cylindrical overall shape of oblong cross section.

9. Device according to any one of the preceding claims, **characterized in that** the device (2) further comprises a control unit (21) suited to causing each vane (16) to pivot according to an actuation sequence during the course of which the vanes (16) associated with different mounts are pivoted between their rest and emission positions sequentially from one mount to another in a given direction of travel over the framework (12).

10. Device according to one of the preceding claims, **characterized in that** the framework delimits a cavity (22) and **in that** the lighting device (2) further comprises a lighting module (20) comprising at least one light guide (40) of elongate shape extending into the cavity (22) delimited by the framework (12).

11. Device according to any one of the preceding claims, **characterized in that** the or at least one light source (16S) is an area light source, notably an organic light emitting diode, covering all or part of the surface of the panel (16P) of the relevant vane.

12. Method for using a device (2) according to any one of the preceding claims, the method involving:
- switching on all of the light sources (16S) of the lighting device (2),
- moving each vane (16) between the rest position and the emission position by means of the actuating device (18), the vanes (16) associated with a given mount (14) being pivoted simultaneously, the vanes (16) respectively associated with different mounts (14) being pivoted with a temporal offset in a predefined order along the framework (12).

13. Method according to Claim 12 implemented by means of a device according to Claim 9, in which the vanes (16) associated with different mounts are pivoted between their rest and emission positions sequentially from one mount to another in a given direction of travel over the framework (12).
